# EUROPÄISCHE PATENTSCHRIFT

(11) **EP 2 011 971 B1**
(45) Veröffentlichungstag und Bekanntmachung des Hinweises auf die Patenterteilung: **27.05.2015**
(21) Anmeldenummer: 08158100.1
(22) Anmeldetag: 12.06.2008
(51) Int. Cl.: F01D 25/24, F01D 11/08

(54) **Aufhängung eines Gehäusedeckbandsegments**
Mounting of a casing shroud segment
Suspension d'un segment de virole de boîtier

(30) Priorität: 06.07.2007 DE 102007031711
(43) Veröffentlichungstag der Anmeldung: 07.01.2009
(73) Patentinhaber: Rolls-Royce Deutschland Ltd & Co KG, 15827 Blankenfelde-Mahlow (DE)
(72) Erfinder: Wunderlich, Thomas, 15834 Rangsdorf (DE)
(74) Vertreter: Gross, Felix

(56) Entgegenhaltungen:
- EP-A1- 0 770 761
- EP-A1- 0 844 369
- WO-A1-99/30009
- US-A- 3 603 599

## Beschreibung

Die Erfindung betrifft eine Gehäusedeckbandsegment-Aufhängung gemäß den Oberbegriff des Anspruchs 1. Eine solche Aufhängung ist aus der EP 0 770 761 A1 bekannt.

Bei Fluggasturbinen werden im Bereich der Hochdruckturbine am Turbinengehäuse gegenüber den Laufschaufelspitzen bekanntermaßen Deckbandsegmente angebracht, die zum einen als Dichtelement dienen, um den oberhalb der Laufschaufelspitzen erforderlichen Spalt so klein wie möglich zu halten, und zum anderen als Hitzeschild fungieren. In einer bekannten Ausführungsform sind die Gehäusedeckbandsegmente am stromabseitigen Ende mit stromauf gerichteten Aufhängehaken ausgebildet, die in einer umlaufenden axialen Aufhängenut aufgehängt und durch einen in einer radialen Ringnut angeordneten Rückhaltering gesichert sind. Während die Gehäusedeckbandsegmente bei deckbandlosen Laufschaufeln mit konzentrisch zu deren Rotationsachse ausgelegten Schaufelspitzen aufgrund des zur Verfügung stehenden ausreichend großen axialen Verschiebeweges vergleichsweise einfach montiert und demontiert werden können, gestaltet sich die von der Rückseite des Triebwerks durchgeführte Montage oder Demontage der Gehäusedeckbandsegmente bei nicht konzentrisch zur Rotationsachse verlaufenden - schräg angestellten oder gestuften - Laufschaufelspitzen ohne Schaufeldeckband oder auch mit Schaufeldeckband und Dichtspitzen in Anbetracht der geringen Spaltweite oder gar der Ausbildung eines Einlaufprofils im Gehäusedeckbandsegment wegen des notwendigen großen axialen und radialen Montageweges als schwierig. Da der erforderliche Montageraum zwar am stromaufseitigen Ende, aber nicht am stromabseitigen Ende der Gehäusedeckbänder zur Verfügung steht, kann das stromabseitige Ende nicht direkt am Turbinengehäuse aufgehängt, sondern nur unter Zwischenschaltung zusätzlicher Bauteile und vorhandener anderer Turbinenteile befestigt werden. Die dadurch bedingte große und komplexe Toleranzkette und thermische Beeinflussung wirkt sich aber nachteilig auf die Ausbildung des Spitzenspaltes und damit den Wirkungsgrad der Hochdruckturbine aus. Zudem werden durch zusätzliche Bauteile und die zwangsläufige Vergrößerung des Bauraums der Hochdruckturbine in diesem Bereich das Gewicht und die Kosten erhöht.

Der Erfindung liegt die Aufgabe zugrunde, eine Aufhängung für die Gehäusedeckbandsegmente im Bereich der Turbine so auszubilden, dass diese unmittelbar am Turbinengehäuse und mit minimaler Spaltweite gegenüber den Laufschaufelspitzen gehalten sind und dennoch der erforderliche Bauraum zur Montage der Gehäusedeckbandsegmente bei eingebauten Laufschaufeln zur Verfügung steht.

Erfindungsgemäß wird die Aufgabe mit einer Gehäusedeckbandsegment-Aufhängung gemäß den Merkmalen des Patentanspruchs 1 gelöst. Vorteilhafte Weiterbildungen der Erfindung ergeben sich aus den Unteransprüchen.

Kern der Erfindung ist die Ausbildung von in regelmäßigem Abstand vorgesehenen Montagetaschen in einer stromab unmittelbar am Turbinengehäuse ausgeformten radialen Rückhalteringnut für einen zur axialen Fixierung der Gehäusedeckbandsegmente vorgesehenen Rückhaltering, wobei der Abstand und die Größe der Taschen auf die Anordnung und Dimensionierung von am Gehäusedeckbandsegment im Abstand ausgebildeten - in eine unmittelbar am Turbinengehäuse angeformte axiale Haltenut einhängbare - Befestigungshaken abgestimmt ist. Der bei schräg angestellten oder abgestuften Laufschaufelspitzen der eingebauten Rotoren für die Montage der Gehäusedeckbandsegmente notwendige axiale Verschiebeweg wird verringert und es steht mehr Platz zur Handhabung der Gehäusedeckbandsegmente bei der Montage zur Verfügung. Neben der Kosten- und Gewichtsreduzierung wird eine Verringerung der Spaltweiten und damit eine Erhöhung des Wirkungsgrads der Turbine erzielt.

Die stromab in der Ringhaltenut vorgesehenen Montagetaschen können bis an die Innenfläche des Turbinengehäuses reichen, so dass ein großer Montageraum zur Verfügung steht und eine dementsprechende Gewichtsreduzierung erzielt wird.

Die Taschenauslaufkante der Montagetaschen endet im horizontalen, mittigen Bereich der Rückhalteringnut und bildet somit eine Dichtkante mit dem Rückhaltering, um das Druckgefälle P1 > P2 vor und hinter den Gehäusedeckbandsegmenten aufrechtzuerhalten.

Die Montagetaschen können stromauf auch an der Vorderkante der Rückhalteringnut auslaufen. Da in diesem Fall keine umlaufende Dichtkante mit dem Rückhaltering erzeugt wird, ist die Anordnung eines umlaufenden Dichtelements vorgesehen.

Ein Ausführungsbeispiel der Erfindung wird anhand der Zeichnung näher erläutert. Es zeigen:
- Fig. 1: eine Schnittansicht einer Gehäusedeckbandsegment-Aufhängung im Bereich der Hochdruckturbine eines Strahltriebwerks;
- Fig. 2: eine Teilansicht der Gehäusedeckbandsegment-Aufhängung nach Fig. 1 in Richtung des Pfeils A, jedoch ohne Dichtblech;
- Fig. 3: eine vergrößerte Schnittdarstellung des stromab liegenden Bereichs der Gehäusedeckbandsegment-Aufhängung; und
- Fig. 4: eine Schnittansicht gemäß Fig. 3, jedoch ohne Dichtkante und mit zusätzlicher Abdichtung des stromab angeordneten Rückhalteringes für das Gehäusedeckbandsegment.

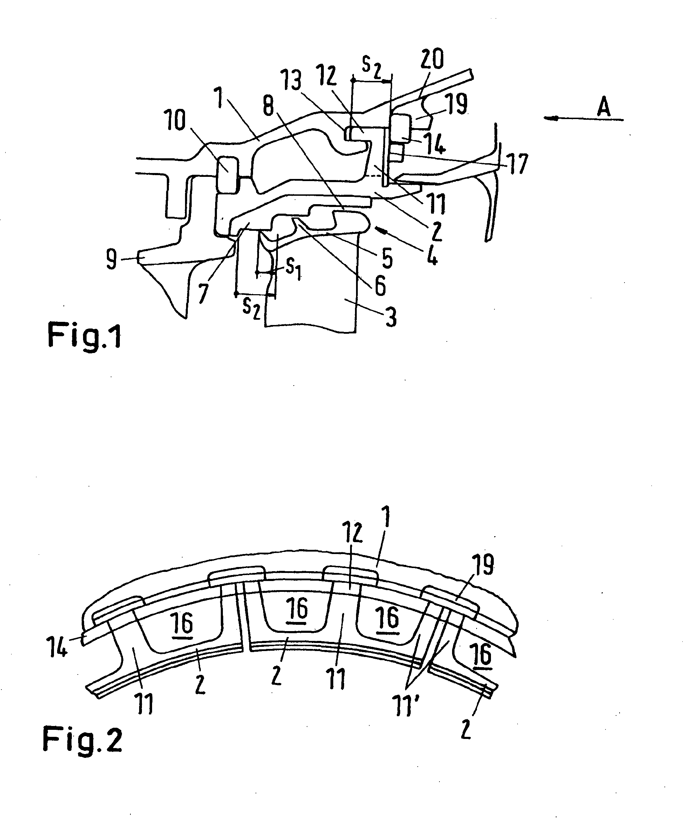

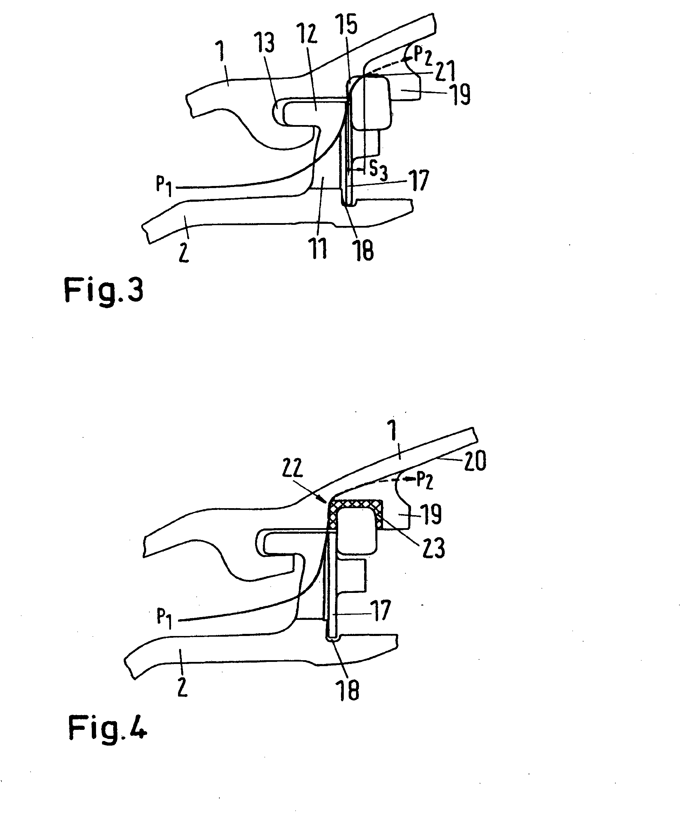

Fig. 1 zeigt ein unmittelbar am Turbinengehäuse 1 gehaltenes Gehäusedeckbandsegment 2, das oberhalb der Laufschaufeln 3 der Hochdruckturbine eines Strahltriebwerks angeordnet ist. Die schräg angestellten (gestuften) Laufschaufelspitzen 4 sind als Schaufeldeckband 5 mit Dichtspitzen 6 ausgebildet, die zwischen sich und der abgestuften Dichtfläche 7 des Gehäusedeckbandsegments 2 einen engen Dichtspalt 8 bilden. Das Gehäusedeckbandsegment 2 ist stromauf am Turbinengehäuse 1 und einem Leitschaufelsegment 9 abgestützt, und einem ersten Rückhaltering 10 zugeordnet. Stromab sind am Gehäusedeckbandsegment 2 im Abstand angeordnete Befestigungshaken 11, 11' angeformt, deren entgegen der Strömungsrichtung abgewinkelter Schenkel 12 in eine unmittelbar am Turbinengehäuse 1 ausgebildete umlaufende axiale Haltenut 13 eingreift. Die am Innenumfang des Turbinengehäuses 1 nebeneinander angeordneten Gehäusedeckbandsegmente 2 sind stromab durch einen zweiten Rückhaltering 14 gesichert, der in einer am Turbinengehäuse 1 angeformten radialen Rückhalteringnut 15 angeordnet ist. Zur Abdichtung der zwischen den im Abstand ausgebildeten Befestigungshaken 11 frei bleibenden Öffnungen 16 ist ein Dichtblech 17 vorgesehen, das durch den zweiten Rückhaltering 14 und eine in den Gehäusedeckbandsegmenten 2 ausgebildete Nut 18 fixiert ist. Die im Turbinengehäuse 1 ausgebildete Rückhalteringnut 15 (Fig. 3) für den zweiten Rückhaltering 14 weist stromabseitig bis an die Innenfläche des Turbinengehäuses 1 reichende Durchbrüche oder Montagetaschen 19 auf, deren Breite größer als die der Befestigungshaken 11 bzw. von aneinander grenzenden Befestigungshaken 11' benachbarter Gehäusedeckbandsegmente 2 ist. Aufgrund der Aufhängung der einzelnen Gehäusedeckbandsegmente 2 mittels jeweils im Abstand an diesen ausgebildeten Befestigungshaken 11, 11' und der Ausbildung von in gleichem Abstand in der Rückhalteringnut 15 vorgesehenen, als Montagetaschen 19 fungierenden Durchbrüchen steht auch bei eingebauten Laufschaufeln 3 mit schräg angestellten bzw. abgestuften Laufschaufelspitzen 4 der erforderliche Bauraum zur Montage und Demontage der Gehäusedeckbandsegmente 2 bei geringer Spitzenspaltweite und entsprechend hohem Turbinenwirkungsgrad zur Verfügung.

Zur Montage der Gehäusedeckbandsegmente 2 wird der Rotor mit den Laufschaufeln 3 um den Weg s1 in eine maximal mögliche rückwärtige Position verschoben werden. In dieser nach hinten verschobenen Rotorposition müssen die Gehäusedeckbandsegmente 2 nur maximal um den Verschiebeweg s2 axial verschoben werden. Dieser vergleichsweise geringe Verschiebeweg s2 der Gehäusedeckbandsegmente 2 reicht jedoch aufgrund der im Abstand ausgebildeten Befestigungshaken 11, 11' und der entsprechend dem Hakenabstand und der Hakenbreite ausgebildeten Montagetaschen 19 aus, um die Befestigungshaken 11, 11' aus der axialen Haltenut 13 zu entriegeln. Für die weitere Demontage stellen die Montagetaschen 19 genügend Platz zur Verfügung, um die Gehäusedeckbandsegmente 2 in Bezug auf die Dichtspitzen der Laufschaufeln sowohl radial als auch weiter axial schrittweise verschieben und vollständig demontieren zu können. Die radiale Ausdehnung der Montagetaschen 19 richtet sich nach der schrägen Anstellung bzw. der radialen Stufung des Gehäusedeckbandes bzw. des Schaufeldeckbandes 5 und der Dichtspitzen 6 und kann bis an die Innenkontur des Turbinengehäuses 1 reichen, um so in diesem Bereich eine maximale Gewichtseinsparung zu erzielen.

Der Druck P1 stromauf des Dichtbleches 17 ist größer als der Druck P2 stromab von diesem. Um bei rückwärtiger Belastung der Gehäusedeckbandsegmente 2 infolge der Montagetaschen 19 dennoch keinen zusätzlichen Leckageweg freizugeben, endet die vordere Taschenauslaufkante 21 (Fig. 3) im horizontalen (mittleren) Bereich der Rückhalteringnut 15 und stellt somit zur sicheren Abdichtung und Beibehaltung des Druckgefälles P1>P2 einen Linienkontakt zwischen Rückhaltering 14 und Turbinengehäuse 1 her. Damit ist eine geringe Verkürzung des möglichen Verschiebeweges s2 um den Betrag s3 verbunden. Wenn die Montagetasche 19 an der Vorderkante 22 der Rückhalteringnut 15 ausläuft, wird der erforderliche Verschiebeweg s2 des Gehäusedeckbandsegments 2 nicht um den Betrag s3 verkürzt, jedoch ist in diesem Fall zur Abdichtung des Leckageweges und zur Aufrechterhaltung des Druckgefälles P1 > P2 die Anordnung eines ringförmigen Dichtelements 23 in der Rückhalteringnut 15 erforderlich (Fig. 4).

### Bezugszeichenliste

- 1: Turbinengehäuse
- 2: Gehäusedeckbandsegment
- 3: Laufschaufeln
- 4: Laufschaufelspitzen
- 5: Schaufeldeckband
- 6: Dichtspitzen v. 5
- 7: Abgestufte Dichtfläche
- 8: Dichtspalt
- 9: Leitschaufelsegment
- 10: erster Rückhaltering
- 11, 11': Befestigungshaken
- 12: Schenkel v. 11, 11'
- 13: axiale Haltenut für 11, 11', 12
- 14: zweiter Rückhaltering
- 15: radiale Rückhalteringnut für 14
- 16: Öffnungen zwischen 11
- 17: Dichtblech
- 18: Nut für 17
- 19: Montagetaschen (Durchbrüche in 15)
- 20: Innenkontur v. 1
- 21: Taschenauslaufkante
- 22: Vorderkante v. 15
- 23: ringförmiges Dichtelement

- S1: Verschiebeweg des Rotors
- S2: axialer Verschiebeweg v. 2
- S3: Verkürzung des Verschiebewegs v. 2

## Patentansprüche

1. Gehäusedeckbandsegment-Aufhängung, die Gehäusedeckbandsegmente (2) einer Hochdruckturbine eines Strahltriebwerks mit einem Turbinengehäuse (1) einer solchen Hochdruckturbine verbindet,
**dadurch gekennzeichnet, dass**
- das stromabseitige Ende der Gehäusedeckbandsegmente (2) in Umfangsrichtung voneinander beabstandete Befestigungshaken (11, 11') aufweist, deren stromauf gerichtete Schenkel (12) in eine unmittelbar am Turbinengehäuse (1) ausgebildete axiale Haltenut (13) eingreifen,
- den Befestigungshaken (11, 11') ein Dichtblech (17) sowie ein in einer radialen, in Umfangsrichtung verlaufenden Rückhalteringnut (15) des Turbinengehäuses (1) angeordneter zweiter Rückhaltering (14) zur axialen Fixierung zugeordnet sind, wobei das Dichtblech (17) und der zweite Rückhaltering (14) stromabseitig der Befestigungshaken (11, 11') angeordnet sind, und
- in der Rückhalteringnut (15) stromabseitig und radial außen der Befestigungshaken (11, 11') sowie entsprechend dem Abstand und der Dimensionierung der Befestigungshaken (11, 11') ausgebildete Durchbrüche vorgesehen sind, die als Montagetaschen (19) fungieren.

2. Gehäusedeckbandsegment-Aufhängung nach Anspruch 1, **dadurch gekennzeichnet, dass** die Montagetaschen (19) in radialer Richtung bis an die Innenkontur des Turbinengehäuses (1) ausgeformt sind.

3. Gehäusedeckbandsegment-Aufhängung nach Anspruch 1, **dadurch gekennzeichnet, dass** die Taschenauslaufkante (21) der Montagetaschen (19) stromaufseitig im radial äußeren, horizontalen Bereich der Rückhalteringnut (15) endet und eine in Umfangsrichtung verlaufende Dichtkante für den Rückhaltering (14) bildet, die einen Linienkontakt zwischen Rückhaltering (14) und Turbinengehäuse (1) herstellt.

4. Gehäusedeckbandsegment-Aufhängung nach Anspruch 1, **dadurch gekennzeichnet, dass** die Montagetaschen (19) an der stromaufseitigen Vorderkante (22) der Rückhalteringnut (15) auslaufen, wobei in der Rückhalteringnut (15) ein ringförmiges Dichtelement (23) angeordnet ist.

5. Gehäusedeckbandsegment-Aufhängung nach Anspruch 1, **dadurch gekennzeichnet, dass** das Gehäusedeckbandsegment (2) stromaufseitig an einem Leitschaufelsegment (9) und am Turbinengehäuse (1) abgestützt ist.

6. Gehäusedeckbandsegment-Aufhängung nach Anspruch 1, **dadurch gekennzeichnet, dass** die in der Rückhalteringnut (15) ausgebildeten Montagetaschen bis an die Innenfläche des Turbinengehäuses (1) reichen und eine Breite derart aufweisen, dass ihre Breite größer ist als die der Befestigungshaken (11) bzw. als die aneinander angrenzender Befestigungshaken (11') benachbarter Gehäusebandsegmente (2).

7. Gehäusedeckbandsegment-Aufhängung nach Anspruch 1, **dadurch gekennzeichnet, dass** die Montagetaschen (19) entsprechend dem Abstand und der Breite der Befestigungshaken (11, 11') ausgebildet sind.

8. Gehäusedeckbandsegment-Aufhängung nach Anspruch 1, **dadurch gekennzeichnet, dass** die Montagetaschen (19) in ihrem Abstand und in ihrer Breite derart dimensioniert sind, dass sie ein für die Demontage der Gehäusedeckbandsegmente (2) notwendiges Entriegeln der Befestigungshaken (11, 11') über einen axialen und radialen Verschiebeweg bei eingebautem Rotor einer Hochdruckturbine ermöglichen.

## Claims

1. Suspension arrangement for the casing shroud segments that connects casing shroud segments (2) of a high-pressure turbine of a jet engine to a turbine casing (1) of such a high-pressure turbine,
**characterized in that**
- the downstream ends of the casing shroud segments (2) are provided with attaching hooks (11, 11') arranged at a distance from one another in the circumferential direction, whose legs (12), which are directed in the upstream direction, engage an axial retaining groove (13) formed directly on the turbine casing (1),
- a sealing plate (17) and a second retaining ring (14) arranged in a radial retaining ring groove (15) of the turbine casing (1), said groove extending in the circumferential direction, are associated with the attaching hooks (11, 11') for axial retention, with the sealing plate (17) and the second retaining ring (14) being arranged downstream of the attaching hooks (11, 11'), and
- break-throughs acting as assembly pockets (19) are provided in the retaining ring groove (15) downstream and radially outside of the attaching hooks (11, 11'), the design of said break-throughs agreeing with the distance and the dimensioning of the attaching hooks (11, 11').

2. Suspension arrangement for the casing shroud segments in accordance with Claim 1, **characterized in that** the assembly pockets (19) in the radial direction are formed up to the inner contour of the turbine casing (1).

3. Suspension arrangement for the casing shroud segments in accordance with Claim 1, **characterized in that** the pocket run-out edge (21) of the assembly pockets (19) ends on the upstream side in the radially outer, horizontal area of the retaining ring groove (15) and forms a circumferential sealing edge for the retaining ring (14), that provides a line contact between the retaining ring (14) and the turbine casing (1).

4. Suspension arrangement for the casing shroud segments in accordance with Claim 1, **characterized in that** the assembly pockets (19) run out at the upstream leading edge (22) of the retaining ring groove (15) with an annular sealing element (23) being arranged in the retaining ring groove (15).

5. Suspension arrangement for the casing shroud segments in accordance with Claim 1, **characterized in that** the casing shroud segment (2) is supported on the upstream side by a stator vane segment (9) and the turbine casing (1).

6. Suspension arrangement for the casing shroud segments in accordance with Claim 1, **characterized in that** the assembly pockets provided in the retaining ring groove (15) reach up to the inner surface of the turbine casing (1) and have a width such that it exceeds the width of the attaching hooks (11), or of attaching hooks (11') adjoining one another of adjacent casing shroud segments (2).

7. Suspension arrangement for the casing shroud segments in accordance with Claim 1, **characterized in that** the design of the assembly pockets (19) agrees with the distance and the width of the attaching hooks (11, 11').

8. Suspension arrangement for the casing shroud segments in accordance with Claim 1, **characterized in that** the assembly pockets (19), as regards their distance and width, are dimensioned such that they enable unlocking of the attaching hooks (11, 11'), necessary for demounting the casing shroud segments (2), via an axial and a radial travel, with the rotor of a high-pressure turbine being installed.

## Revendications

1. Attache pour segments de virole de carter, qui relie les segments de virole de carter (2) d'une turbine haute pression d'un moteur à réaction avec un carter de turbine (1) d'une telle turbine haute pression, **caractérisée en ce**
- **que** l'extrémité aval des segments de virole de carter (2) présente des crochets de fixation (11, 11') distants les uns des autres dans le sens circonférentiel, dont les branches (12) orientées vers l'amont s'engagent dans une gorge d'arrêt (13) axiale formée directement sur le carter de turbine (1),
- **que** pour assurer la fixation axiale, sont associés aux crochets de fixation (11, 11') une plaque d'étanchéité (17) ainsi qu'un deuxième anneau de maintien (14) disposé dans une gorge (15) radiale de l'anneau de maintien du carter de turbine (1) s'étendant dans le sens circonférentiel, la plaque d'étanchéité (17) et le deuxième anneau de maintien (14) étant disposés en aval des crochets de fixation (11, 11'), et
- **que** dans la gorge (15) de l'anneau de maintien sont prévus des ajours faisant office de poches de montage (19) en aval et radialement à l'extérieur des crochets de fixation (11, 11') et formés conformément à l'écartement et au dimensionnement des crochets de fixation (11, 11').

2. Attache pour segments de virole de carter selon la revendication n° 1, **caractérisée en ce que** dans le sens radial, les poches de montage (19) sont façonnées jusqu'au contour intérieur du carter de turbine (1).

3. Attache pour segments de virole de carter selon la revendication n° 1, **caractérisée en ce que** l'arête de sortie (21) des poches de montage (19) se termine en amont dans la zone radialement extérieure, horizontale de la gorge (15) de l'anneau de maintien et forme pour l'anneau de maintien (14) un bord d'étanchéité qui s'étend dans le sens circonférentiel et établit un contact linéaire entre l'anneau de maintien (14) et le carter de turbine (1).

4. Attache pour segments de virole de carter selon la revendication n° 1, **caractérisée en ce que** les poches de montage (19) se terminent sur le bord avant (22) amont de la gorge (15) de l'anneau de maintien, sachant qu'un élément d'étanchéité (23) annulaire est disposé dans la gorge (15) de l'anneau de maintien.

5. Attache pour segments de virole de carter selon la revendication n° 1, **caractérisée en ce que** le segment de virole de carter (2) s'appuie en amont sur un segment d'aube fixe (9) et sur le carter de turbine (1).

6. Attache pour segments de virole de carter selon la revendication n° 1, **caractérisée en ce que** les poches de montage formées dans la gorge (15) de l'anneau de maintien s'étendent jusqu'à la face intérieure du carter de turbine (1) et présentent une largeur telle que leur largeur est supérieure à celle des crochets de fixation (11) et/ou à celle de crochets de fixation (11') adjacents les uns aux autres de segments de virole de carter (2) voisins.

7. Attache pour segments de virole de carter selon la revendication n° 1, **caractérisée en ce que** les poches de montage (19) sont formées conformément à l'écartement et à la largeur des crochets de fixation (11, 11').

8. Attache pour segments de virole de carter selon la revendication n° 1, **caractérisée en ce que** les poches de montage (19) quant à leur écartement et leur largeur sont dimensionnées de manière telle qu'elles permettent un déverrouillage des crochets de fixation (11, 11'), nécessaire pour le démontage des segments de virole de carter (2), par un déplacement axial et radial lorsque le rotor d'une turbine haute pression est monté.
